# EUROPÄISCHE PATENTANMELDUNG

(11) **EP 0 991 251 A2**
(43) Veröffentlichungstag der Anmeldung: **05.04.2000**
(21) Anmeldenummer: 99810851.8
(22) Anmeldetag: 23.09.1999
(51) Int. Cl.: H04M 3/22

(54) **Überwachungssystem und -verfahren für Telefonie-Netze**

(30) Priorität: 30.09.1998 DE 19844906
(71) Anmelder: Switching Test Solutions AG, 8055 Zürich (CH)
(72) Erfinder: Freiburghaus, Pascal, 8955 Oetwil a.d. Limmat (CH); Kowatsch, Thomas, 8045 Zürich (CH); Nadig, Christoph, 8038 Zürich (CH)
(74) Vertreter: Barth, Carl Otto

(57) **Zusammenfassung**

Die Erfindung betrifft die teilnehmerbezogene Prüfung und Überwachung des Gesprächsverkehrs in Telefonie-Netzen, insbesondere solchen Netzen, die Mobilkommunikationsnetze einschliessen. Sie ist besonders darauf gerichtet, Verbindungsdaten zu ermitteln, auszuwählen und zu speichern um daraus bestimmte Erkenntnisse, z.B. über teilnehmerbezogene Netzbelastungen, teilnehmerbezogene Limitenüberschreitungen oder missbräuchliche Benutzungen ermitteln zu und ggf. korrigierend eingreifen zu können. Durch den erfindungsgemäss modularen Aufbau in Verbindung mit der vorzugsweisen Verwendung von Standard-Schnittstellen und Standard-Protokollen ist sie besonders geeignet, den notwendigen technischen Aufwand zu begrenzen, indem sie die Verwendung von vorhandener und/oder standardisierter Hard- und Software erlaubt und dadurch grösstmögliche Interoperabilität bei grosser Flexibilität gewährleistet.

## Beschreibung

### Technisches Gebiet der Erfindung

Die Erfindung liegt auf dem Gebiet der Telefonie und betrifft die Ermittlung, Auswahl oder Filterung, Speicherung und Auswertung von Teilnehmer-Verbindungsdaten bzw. von einzelnen Aspekten dieser genannten Tätigkeiten. Solche Massnahmen können insbesondere in Mobilkommunikationsnetzen dazu dienen, Missbräuche zu erkennen und möglicherweise zu verhindern oder zumindest Schäden zu minimieren. Weitere Zwecke einer solchen Auswertung können die technisch sinnvolle Verteilung teilnehmerbezogener Netzauslastungen, die Erstellung teilnehmerbezogener Netzleistungsstatistiken, die Feststellung von Überschreitungen vorgegebener Zeit- oder anderer Limiten, z.B. sog. Long Call Thresholds, oder das sog. Call Tracing sein, also die Verfolgung von fehlgeschlagenen Anrufen zur Fehlerbehebung.

### Stand der Technik

Mobilkommunikationsnetze wie das GSM (Global System for Mobile Communication), die ja stets zusammen mit Festnetzen verwendet werden, erfreuen sich steigender Benutzerzahlen wegen der guten Verfügbarkeit, dem schnellem Verbindungsaufbau und der ausgezeichneten Übertragungsqualität. Letztere hängt nicht zuletzt mit der Qualität der Festnetzverbindungen zusammen, da praktisch jeder Anruf schliesslich über ein Festnetz führt. Um sicherzustellen, dass ein solches, höchst komplexes System unter den mannigfaltigen Randbedingungen ausreichend zuverlässig funktioniert, sind eine Reihe von Massnahmen notwendig. Eine dieser Massnahmen ist das praktisch ununterbrochen durchgeführte Nachprüfen oder Monitoring verschiedener Funktionen der Netze und Netzverbindungen, die ja ständig Änderungen, insbesondere Erweiterungen, unterliegen. Dabei ist das Monitoring der zwischen Teilnehmern hergestellten Verbindungen, die sinnvolle Auswahl und ggf. entsprechende Aufzeichnung der ermittelten Daten und die spätere Auswertung der aufgezeichneten Daten von besonderer wirtschaftlicher Bedeutung, da aus diesen Daten Rückschlüsse auf so verschiedene Aspekte wie Netzauslastung oder Missbräuche gezogen werden können.

Insbesondere die Erkennung und Verhinderung missbräuchlicher Benutzung stösst auf grosses Interesses der Netzbetreiber, da hier die wirtschaftlichen Interessen unmittelbar betroffen sind. Solche Missbräuche können einmal darin liegen, dass geklonte Subscriber Identification Modules (SIMs) benutzt werden, also SIMs, die ein tatsächlich gültiges und zugelassenes Gegenstück haben. Bekanntermassen enthält jedes Mobilfunkgerät zur eindeutigen Identifikation ein solches SIM, das als SIM-Karte verschiedener Grösse ausgestaltet ist und in das Mobilfunkgerät eingesetzt wird.

So beschreibt beispielsweise das US Patent 5 335 265 von Cooper et al. eine Anordnung zum Erkennen solcher geklonter SIMs, wobei zeitliche und räumliche Anomalien, die typisch für einen Missbrauchsversuch sind, zur Erkennung genutzt werden. Dieses Patent beschreibt die Speicherung der einem Benutzer zugeordneten SIM-Daten und zugehöriger Gesprächs-, also Verbindungsinformationen, ist jedoch beschränkt auf die genannte Erkennung geklonter SIMs.

Ein anderer Ansatz zur Erkennung bestimmter Arten des Missbrauchs ist im US Patent 5 734 977 von Sanmugam mit einer ganzen Reihe weiterer Referenzen beschrieben. Hier wird Missbrauch insbesondere dann angenommen und erkannt, wenn ein zweiter Anruf unter einer bereits benutzten Mobilfunk-Identifikation auftritt. Es ist auch ein Ansatz für eine Missbrauchserkennung vorgeschlagen, wenn die Mobilfunkzentrale eine vorzeitige Registrierung empfängt oder wenn das sog. Tracing eines Mobilfunkgerät ungewöhnliche Aktivitäten offenbart. Auch hier ist eine Speicherung von Verbindungsdaten unumgänglich.

Eine weitere singuläre Lösung für einen Teilaspekt der Verhinderung eines speziellen Missbrauchs, nämlich des Gebührenbetrugs, ist aus der europäischen Patentschrift EP 0 757 871 von Dicks et al. bekannt, die ein Verfahren zur Ermittlung von Teilnehmern eines Mobilfunknetzes mit übermässigem Verkehrsaufkommen zeigt. Dazu wird der gesamte vom Mobilfunknetz ausgehende Signalisierungsverkehr gespeichert und daraus bestimmte Elemente, wie Kennzeichen des rufenden Teilnehmers und Dauer und Zielgebiet des Anrufs, ermittelt und unmittelbar die sich daraus ergebenden, dem Teilnehmer zu belastenden Gebühren ermittelt. Sobald die Gebührensumme eine vorgegebene, teilnehmerbezogene Grenze überschreitet, erfolgt eine entsprechende Ausgabe, die dann zu weiteren Massnahmen führen kann. Dabei werden anfänglich sämtliche Verbindungs-Daten gespeichert, nachfolgend aber nur die akkumulierten, teilnehmerbezogenen Gebührensummen.

Es ist offensichtlich, dass die genannten Veröffentlichungen eine ganze Reihe von Teilaspekten der Missbrauchserkennung adressieren und dafür auch Lösungen anbieten. Es ist aber auch offensichtlich, dass ein einheitliches Konzept, das die Gesamtheit oder jedenfalls eine Vielzahl der notwendigen oder gewünschten teilnehmerbezogenen Überwachungsdienste betrifft, nicht offenbart ist. Eine einfache Addition der bekannten Lösungen scheidet schon deswegen aus, weil die Benutzer, hier die Netzbetreiber, verschiedenartigen Bedürfnisse haben. Dazu kommen die Schwierigkeiten, die sich aus unterschiedlichen Hardware-Voraussetzungen der Netzbetreiber ergeben. Schliesslich muss auch der ständigen Veränderung der Netze, insbesondere dem enormen Wachstum, das bisher zu beobachten war und aller Voraussicht noch für einige Zeit anhalten wird, Rechnung getragen werden. Letzteres wird durch singuläre Lösungen erschwert, wenn nicht sogar unmöglich gemacht.

Ein sehr genereller Ansatz für die Überwachung von Netzen und die Fehlerfeststellung ist von Pester im US Patent 5 715 294 angegeben. In dieser sehr umfangreichen Patentschrift ist ein präventives Überwachungs- und Testsystem beschrieben, das zur Feststellung von Link-Überlastungen, Netzwerk-Fehlern oder anderen Netzwerk-Problemen dient. Die Ermittlung von auf die Netzteilnehmer bezogenen Daten ist nicht beschrieben und kann von der gezeigten und beschriebenen Anordnung auch nicht geleistet werden, da die dazu erforderliche teilnehmerbezogene Akkumulation nicht vorgesehen ist. Da die teilnehmerbezogenen Signale über eine nicht vorhersehbare Vielzahl von Links laufen, ist deren teilnehmerbezogene Akkumulation nötig zur Erstellung und Auswertung teilnehmerspezifischer Statistiken, auf Grund welcher dann zweckentsprechende Massnahmen, z.B. die Sperrung eines Teilnehmeranschlusses oder sogar die Unterbrechung einer bestehenden Verbindung, durchgeführt werden kann. Zusammengefasst kann man daher feststellen, dass das genannte US Patent 5 715 294 weder einen Hinweis auf die der vorliegenden Erfindung zu Grunde liegende Problematik, noch einen Ansatz zu deren Lösung enthält.

Die Erfindung hat es sich zur Aufgabe gestellt, einen sozusagen ganzheitlichen Lösungsansatz für die genannten teilnehmerbezogenen Bedürfnisse, insbesondere der Missbrauchserkennungzu liefern. Der erfindungsgemässe Ansatz bietet dazu noch Möglichkeiten der anderweitigen Nutzung, beispielsweise als Backup für bestimmte kritische, teilnehmerbezogene Informationen. Die Erfindung addiert dabei nicht einfach bekannte Speziallösungen - obwohl diese integriert werden können - sondern zeigt einen Weg, der es erlaubt, in integraler Weise sogar bei den Netzbetreibern bereits vorhandene Einrichtungen, d.h. sowohl vorhandene Hardware wie installierte Software, mit in die Gesamtlösung einzubeziehen.

### Die Erfindung

Die Erfindung verfolgt das Ziel, eine Einrichtung und ein Verfahren zu schaffen, die es ermöglicht ist, die erforderliche Überwachung, das sog. Monitoring, der teilnehmerbezogenen Verbindungsdaten und die nachfolgenden Ver- und Bearbeitungsschritte möglichst ökonomisch und technisch vorteilhaft durchzuführen. Dazu wird als Prinzip eine weitestgehende Verwendung standardisierter Bauteile und Baugruppen angestrebt. Ein weiteres Ziel ist es, eine Datenauswahl für eine sinnvolle Speicherung über einen bestimmten Zeitraum zu gewährleisten, so dass einerseits die teilnehmerbezogenen Datenmengen überschaubar bleiben, andererseits aber gespeicherte Daten später einer Auswertung, die ggf. mehrfach und unter verschiedenen Aspekten durchgeführt werden kann, unterworfen werden können. Dies ist besonders unter dem Gesichtspunkt anzustreben, dass ein Missbrauch oft erst später als solcher erkannt wird und daher eine unmittelbare, also Online-Verarbeitung der Verbindungsdaten ohne nachfolgende Speicherung eine Erkennung, die ja oft eine Rückschau erfordert, verunmöglicht.

Zwar könnte das eben genannte Problem durch andauernde Speicherung sämtlicher hereinkommenden Verbindungsdaten gelöst werden, aber der dazu notwendige Speicherplatz und der Aufwand für die nachfolgende Filterung oder Auswahl der gewünschten oder für den jeweiligen Zweck nützlichen Daten würde schnell alle Grenzen sprengen. Dass dazu noch rechtliche Gesichtspunkte des Datenschutzes kommen, die je nach Rechtskreis eine solche pauschale Speicherung sämtlicher Daten zumindest kritisch erscheinen lassen, sei nur am Rande erwähnt.

Eine weitere Aufgabe ist es, kritische teilnehmerbezogenen Funktionen des eigentlichen Netzes als Backup abzudecken. Als Beispiel dafür sei die Nachgenerierung von Gebührendaten genannt; diese muss dann ermöglicht werden, wenn beispielsweise die sog. Billing-Komponente, also die Einrichtung zur Generierung der Abrechnungsdaten, ausgefallen ist oder die von ihr ermittelten Gebührendaten verlorengegangen sind. Als weiteres Beispiel mag die teilnehmerbezogene Leistungsmessung dienen, die beispielsweise zur Anwendung von Rabattsätzen oder zur Prioritätseinräumung dienen kann.

Zusammengefasst werden diese Aufgaben im Prinzip dadurch gelöst, dass erfindungsgemäss das teilnehmerbezogene Überwachungssystem der genannten Art einerseits modular aufgebaut ist, dass die verwendeten Schnittstellen Standard-Schnittstellen sind, und dass zwischen den modularen Einheiten standardisierte Protokolle verwendet werden. Erfindungsgemäss ist vorgesehen, dass an geeigneter Stelle ein Ausfiltern irrelevanter Daten erfolgt, so dass nur relevante, teilnehmerspezifische Daten weiterverarbeitet und ggf. gespeichert werden. Die Patentansprüche enthalten Einzelheiten der Lösungen, Details können dem in der nachfolgenden Beschreibung anhand der Zeichnungen dargestellten Ausführungsbeispiel entnommen werden.

Das erfindungsgemässe Überwachungssystem erlaubt nicht nur eine praktisch unterbrechungsfreie Anpassung dieses teilnehmerbezogenen Systems an sich ändernde Bedürfnisse eines Netzbetreibers, sondern ermöglicht auch eine ständige Überprüfung der angewandten Erkennungs- und Auswertungsschemata und ggf. deren Änderung. Weiterhin können sogar die teilnehmerbezogenen Gesprächsdaten unter verschiedenen Blickwinkeln - wenn nötig, auch nachträglich - durch eine andere Institution als den Netzbetreiber geprüft oder ausgewertet werden. Hier kann man z.B. an eine gerichtliche Untersuchung denken, bei der es eine Rolle spielen kann, wann eine bestimmter Teilnehmer Gespräche mit welchen anderen Teilnehmern geführt hat. Für eine solche Auswertung kommen insbesondere folgende, sehr verschiedenartige Gebiete in Betracht:
- Erkennung von geklonten SIMs
- Erkennung von Limiten-Überschreitungen, z.B. Zeit- oder Gebühren-Limiten
- Anruf-Verfolgung (Call Tracing)
- Backup für die Gebührenberechnung (Backup for Billing System)

### Ausführungsbeispiel

Nachfolgend wird ein Ausführungsbeispiel der Erfindung in Verbindung mit den Zeichnungen näher beschrieben.

In den Zeichnungen zeigen:
- Fig. 1: eine Übersicht über die gesamte teilnehmerbezogene Überwachungs-Anordnung
- Fig. 2: ein technisches Beispiel für eine Vorverarbeitungseinheit (PPE)
- Fig. 3: ein Ausführungsbeispiel einer Datenverarbeitungseinheit (DPE)
- Fig. 4: ein Prozessdiagramm einer Anwendung

Der besseren Übersichtlichkeit halber folgt eine Bezugszeichenliste. Folgende Elemente sind in den Figuren mit Bezugszeichen benannt:

### Bezugszeichenliste

**Fig. 1**
- 1,2,3: Teil-Netzwerk oder Netzwerk-Element
- 4,4': Signalisierungs-Verbindung, sog. Trunk oder Link
- 5, 5': Abtast-Verbindungsleitung
- 6, 6': Vorverarbeitungseinheit, sog. Pre-Processing Element oder PPE
- 7, 7': Standard-Schnittstelle, z.B. Fast Ethernet-Verbindung
- 8, 8': Datenverarbeitungseinheit, Data Processing Element oder DPE
- 9,9': Standard-Schnittstelle, z.B. Ethernet-Verbindung
- 10: Wide Area Network oder WAN
- 11, 11': Standard-Schnittstelle
- 12,12': Server oder Workstation
- 13,13': Standard-Schnittstelle
- 14,14': beliebiges Standard-Netz
- 15a-15c: Client
- 15a'-15c': Client
- 16, 16': Standard-Schnittstelle

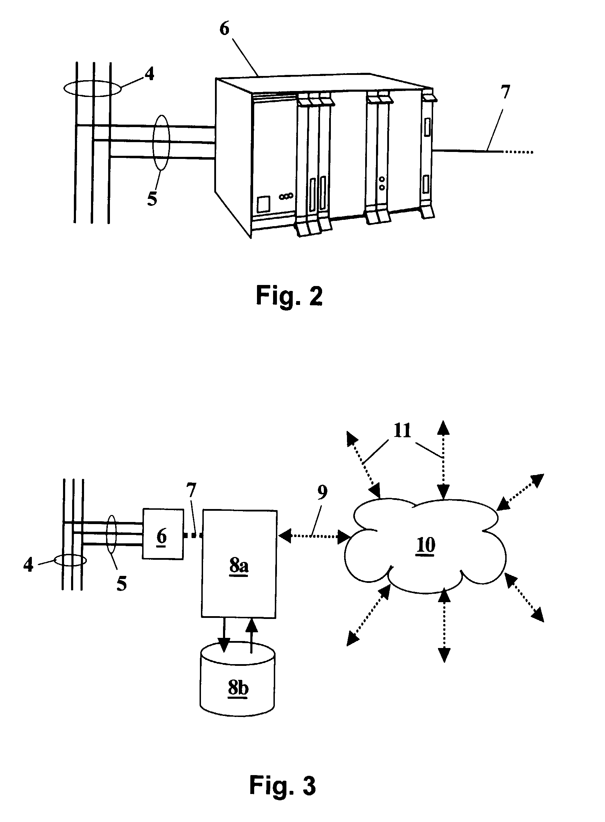

**Zusätzlich In Fig. 3**
- 8a: (eigentliche) Verarbeitungskomponente
- 8b: Speicher, hier Festplatte

**Fig. 4**
- 17,17': Application Intelligent Agents (auf DPE 8)
- 18: Application Manager (auf Server 12, 12')
- 19: Zentrale Datenhaltung
- 20: Application Client

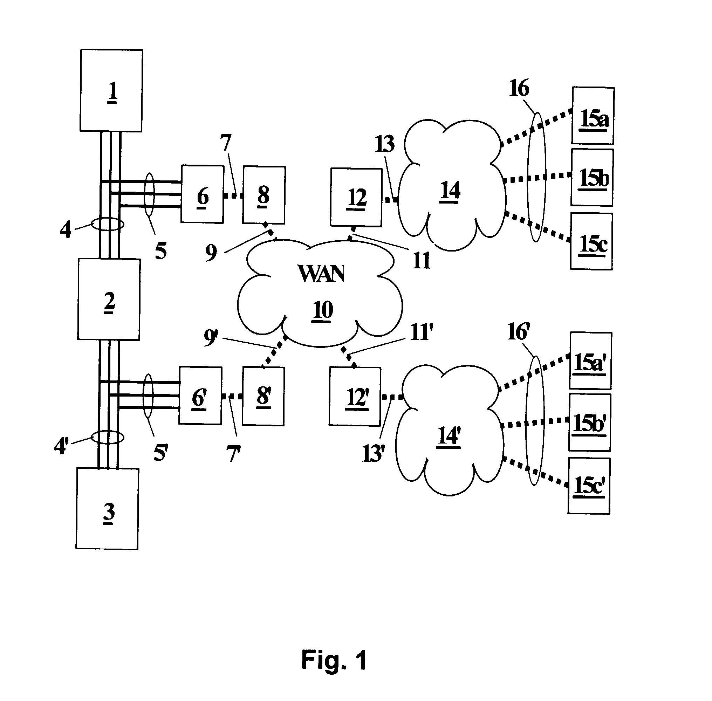

In Fig. 1 ist eine Übersicht der gesamten Anordnung dargestellt, wobei die wesentlichen Komponenten als einfache Boxen dargestellt sind. Die drei Teil-Netzwerke 1 bis 3 sind beliebige Telekom-Netzwerke mit ihren Signalisierungs-Verbindungen, den sog. Trunks 4 und 4'. Die gezeigte Anordnung ist ziemlich symmetrisch und besteht aus zwei identischen Zweigen, was durch die Schreibweise der Bezugszeichen X und X' angedeutet werden soll. Selbstverständlich ist die erfindungsgemässe Lösung weder auf eine Anordnung mit zwei Zweigen beschränkt, noch müssen diese Zweige notwendigerweise identisch sein.

An die Trunks 4 und 4' sind über Abtast-Verbindungsleitungen 5 und 5', vorzugsweise hochohmig bzw. galvanisch getrennt, jeweils eine erste Komponente 6 und 6' der eigentlichen Überwachungseinrichtungen, der sog. Probes, angeschlossen. Wie weiter unten noch detailliert dargestellt, besteht jede dieser Probes aus mehreren Komponenten, in denen gemäss der Erfindung eine Verarbeitung der teilnehmerbezogenen Signalisierungsdaten stattfindet. In der ersten Komponente jeder Probe, dem Pre-Processing Element, PPE 6 und 6' (Vorverarbeitungs-Element) findet die Daten-Akquisition und Daten-Vorverarbeitung statt; in ihm werden die Signalisierungsdaten empfangen und vorverarbeitet.

Bei dieser Vorverarbeitung wird einerseits ein Teil der von den Trunks übertragenen Daten herausgefiltert, also für die weitere Verarbeitung nicht berücksichtigt. Dies betrifft beispielsweise Leerdaten wie sog. FISU-Daten (Fill-In Signal Units) oder Statusanzeigen wie sog. LSSU (Link Status Signal Units), die beide über die Signalisierungskanäle laufen, aber für das von der Erfindung angestrebte Ziel belanglos sind. Dadurch wird die nachfolgend zu verarbeitende Datenmenge bereits erheblich reduziert.

Ein weiterer Bestandteil der Vorverarbeitung in den PPEs 6 und 6' kann darin bestehen, Zeitmarken anzubringen, sog. Time Stamps, die den gelesenen Daten zugeordnet werden. Solche Time Stamps können für eine Reihe von späteren Auswertungen von entscheidender Bedeutung sein. So ist es beispielsweise wichtig zu wissen, *wann* ein bestimmter Anruf stattgefunden hat, wenn es darum geht, missbräuchliche Benutzungen oder auch Übertragungsprobleme zu erkennen.

Zusammengefasst findet also in den Vorverarbeitungseinheiten (PPEs) 6 und 6' einerseits eine Datenreduktion durch Ausfilterung unwesentlicher, z.B. nicht teilnehmerbezogener Daten statt; andererseits kann noch eine Zeitmarkierung der ermittelten und gefilterten Daten erfolgen. Es ist festzuhalten, dass alle Vorgänge in den Vorverarbeitungseinheiten (PPE) 6 und 6' in Echtzeit durchgeführt werden. Es ist ausserdem festzuhalten, dass erfindungsgemäss die von den PPEs erzeugten Daten in einem Standard-Format, z.B. dem HDLC-Format (High Level Data-Link Control Format), dargestellt werden und dass die weitere Übertragung der von den PPEs erzeugten Daten vorzugsweise über Standard-Protokolle, z.B. das TCP/IP-Protokoll, erfolgt. Damit wird die von der Erfindung angestrebte Flexibilität, insbesondere Skalierbarkeit und Universalität und damit eine grosse Unabhängigkeit von gegebener Hard- und Software erzielt. Die in Fig. 1 gestrichelt dargestellten Verbindungen 7 und 7', 9 und 9', etc., sollen andeuten, dass über die so dargestellten Verbindungen Standard-Protokolle und Standard-Formate verwendet werden.

Mit den PPEs 6 und 6' über z.B. Ethernet-Verbindungen 7 und 7' verbunden sind die Datenverarbeitungseinheiten oder Data Processing Elements (DPEs) 8 und 8'. Jedes DPE, das die zweite Komponente der Probe bildet, hat mehrere Aufgaben: Einerseits werden die gelieferten Daten zur Speicherung teilnehmerbezogen aufbereitet und einem Langzeitspeicher, beispielsweise einer Festplatte, zugeführt. In vielen Fällen wird dabei eine Datenkomprimierung angezeigt sein, die dann ebenfalls von der DPE durchgeführt wird. Derartige Massnahmen sind dem Fachpersonal vertraut und bedürfen daher keiner Erläuterung an dieser Stelle. Ebenso ist es selbstverständlich, dass Festplatten oder andere Speicher intern im DPE oder extern angeordnet sein können, wie in Fig. 3 noch genauer gezeigt werden wird. Als DPE kann - und dies ist einer der Vorteile der Erfindung, die auf der Anwendung standardisierter Datenformate und Protokolle basiert - eine handelsübliche Workstation Verwendung finden.

Die wichtigste Aufgabe der DPE 8 bzw. 8' ist die Korrelation einzelner Nachrichten zu teilnehmerbezogenen Daten. Diese Korrelation ist in der Regel nicht trivial, da nicht alle Nachrichten die Rufnummern der Teilnehmer enthalten. Im Falle der ISUP Protokoll Nachrichten geschieht diese Korrelation ueber den Circuit Identification Code (CIC), der eine Sprachbeziehung, d.h. ein Gespräch oder einen Anruf, eindeutig bezeichnet. Hiermit kann pro Link eine Korrelation zu einem Teilnehmer erzeugt werden. Da ein Anruf in der Regel über verschiedene Knoten im Netz geleitet, d.h. "geroutet" wird, müssen die einzelnen Teilnachrichten zusammengefasst werden, damit der Anruf nicht mehrfach gezählt wird und aus einer fehlerhaften Zählung keine falschen Schlüsse gezogen werden. So könnte beispielsweise durch fehlerhafte Zählung irrtümlicherweise ein SIM-Card Cloning detektiert werden, welches in Wirklichkeit nicht vorhanden ist. Die Korrelation der teilnehmerbezogenen Daten pro Link zu einem einzigen Gespräch oder Anruf kann vorzugsweise auf einem der Application Server 12 bzw. 12' vollzogen werden. Dazu würden die Link-Daten von einer der DPEs auf einen Server übertragen, wo sie dann zusammengefasst werden können. Typischerweise geschieht diese teilnehmerbezogene Akkumulation über die Rufnummern und die Zeit. Hier wird auch klar, warum eine einheitliches Zeitnormal unabdingbar ist. Liegen die Zeiten zu weit auseinander, so kann der Anruf nicht mehr vollständig zusammengesetzt werden. Zur Korrelation in Mobilnetzen wird üblicherweise zusätzlich zu den Telefonnummern noch die IMSI-Identifikation (International Mobile Subscriber Identity) hinzugezogen.

Die gewonnenen, teilnehmerbezogenen Daten werden nun einerseits in einer Datenbank (üblicherweise im Server) gespeichert, anderseits können sie auch direkt an andere Applikationen gesendet werden. Als Beispiele seien hier die bereits genannten Applikationen zur Missbrauchserkennung oder aber Applikationen zur Quality-of-Service-Messung erwähnt, welch letztere typischerweise Call-Setup-Zeiten oder abnormale Verbindungsabbrüche für bestimmte Rufnummernbereiche bestimmen. Es sei hier auch erwähnen, dass die gesamte Verarbeitung der Daten in der Regel quasi-online erfolgt. Dies im Gegensatz zu Billing-Systemen, bei denen diese Auswertungen prinzipiell ebenfalls durchgeführt werden können, jedoch nur mit einer grossen Zeitverzögerung von mehr als einem Tag. Für eine Missbrauchserkennung ist eine solche Verzögerung inakzeptabel.

Zusammengefasst kann also eine der DPEs 8 bzw. 8' die auf der Festplatte oder einem anderen Speicher enthaltenen Daten nach vorgegebenen Kriterien, beispielsweise auch mittels sog. Application Intelligent Agents, aufbereiten und auswerten und die Ergebnisse der Auswertung dem "interessierten" Client zusenden.

Wie oben bereits angedeutet, werden solche Application Intelligent Agents, die die Auswertung der ermittelten Daten durch die DPE 8 bzw. 8' bewirken, vorteilhafterweise durch Server 12 und 12' ausgeführt und können beispielsweise über ein Wide Area Network (WAN) 10 über die Standard-Schnittstellen 9 und 9', bzw. 11 und 11', übermittelt werden. Jeder dieser Server 12 und 12' kann wiederum durch eine Anzahl von Clients 15a bis 15c, bzw. 15a' bis 15c', ebenfalls über Standard-Schnittstellen 13 und 13', bzw. 16 und 16', über beliebige Netze 14 und 14' angesteuert werden. Dabei ist es wegen der Verwendung von Standard-Protokollen und Standard-Schnittstellen ohne Belang, welche Art Workstations oder andere Computer als Clients 15 oder Server 12 benutzt werden.

In Fig. 2 ist ein technisches Ausführungsbeispiel der Vorverarbeitungseinheit (Pre-Processing Element oder PPE) 6 schematisch dargestellt. Das PPE ist hier als sog. 19-Zoll-Rack ausgebildet, in das entsprechende Boards eingesteckt werden können. Einerseits sind dies standardisierte Boards mit Interface-Karten, z.B. E1/T1 Interfaces für den Anschluss an 2Mbit- bzw. 1.54Mbit-Trunks über die Leitungen 5. Solche Interfaces können die Signale einer grossen Zahl von Trunks aufnehmen und viele Signalisierungskanäle verarbeiten. Mit beispielsweise sieben der genannten Interface Boards im Rack kann das PPE die Signale von mehr als fünfzig Trunks unmittelbar ohne Anwendung eines Multiplex-Verfahren verarbeiten.

Weiterhin enthält das in Fig. 2 gezeigte PPE noch sog. Base Boards, welche die Steuerung der genannten Interface Boards durchführen. Den Ausgang des PPE schliesslich bildet ein Communication Board, von dem aus die Standard-Schnittstelle 7, z.B. eine Fast Ethernet-Verbindung, zur Datenverarbeitungseinheit 8 (DPE) führt. Gemäss einem speziellen Gesichtspunkt der Erfindung kann demnach bereits an dieser Schnittstelle die gesamte Datenübertragung in standardisierter Form abgewickelt werden, so dass praktisch völlige Wahlfreiheit bezüglich der weiterverarbeitenden Hard- und Software besteht.

In Fig. 3 ist ein Ausführungsbeispiel einer Datenverarbeitungseinheit 8, (Data Processing Element oder DPE) und einiger Einzelheiten detaillierter dargestellt. Wie oben bereits erwähnt, bilden PPE und DPE zusammen die sog. Probe. In der DPE findet eine Aufbereitung der Daten zur Speicherung statt, bevor es anschliessend auf einem Sekundärspeichermedium gespeichert wird. Diese Verarbeitung erfolgt in der (eigentlichen) Verarbeitungskomponente 8a, hier wieder nur als als Box dargestellt, da jede handlesübliche Workstation dafür Verwendung finden kann. Die gefilterten und ggf. komprimierten Daten werden dem hier als externe Festplatte dargestellten Sekundärspeicher 8b zugeführt und auf diesem gespeichert.

Auf der eigentlichen Verarbeitungseinheit 8a, die über eine Standard-Schnittstelle 9 mit einem Datennetz 10, beispielsweise einem Ethernet, verbunden ist, können nun praktisch beliebige Prozesse, z.B. die genannten Application Intelligent Agents, zur Auswertung der gespeicherten teilnehmerbezogenen Daten ablaufen. Wichtig ist, dass diese Agents sowohl auf der Verarbeitungskomponente 8a lokal vorhanden sein können, als auch über das Netz 10 aus praktisch beliebiger Quelle kommen können. Auch ist es möglich, wie bereits angedeutet, PPE 6 und DPE 8 räumlich voneinander zu trennen, da zwischen ihnen ebenfalls eine Standard-Schnittstelle 7 vorgesehen sein kann.

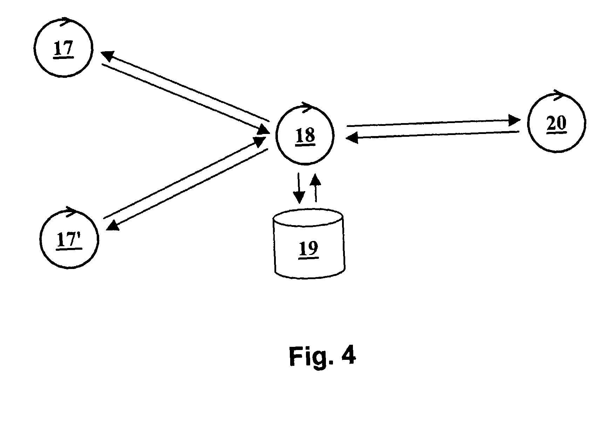

In Fig. 4 ist ein Prozessdiagramm dargestellt, welches die typischen Kommunikationspfade aufzeigt. Auf der eigentlichen Verarbeitungseinheit 8a (Fig. 3) befindet sich ein Application Intelligent Agent 17, welcher die im Speicher 8b (Fig. 3) aufgezeichneten teilnehmerbezogenen Daten liest und nach den von einem sog. Application Manager 18 in Auftrag gegebenen Gesichtspunkten analysiert. Die Resultate werden an den Manager 18 geschickt, welcher diese bei Bedarf zusätzlich speichert, üblicherweise in einer Datenbank 19, und einem oder mehreren Application Clients 20 schickt, welche die Daten schliesslich in geigneter Form zu Darstellung bringen. Es sei hier nochmals erwähnt, dass die Verteilung dieser Prozesse durch die Verwendung von Standard-Schnittstellen absolut wahlfrei ist, wobei es für die Funktion irrelevant ist, wo einzelne Prozesse oder Prozessteile ausgeführt werden. Vorzugsweise wird sich der Application Manager 18 jedoch auf einem leistungsfähigen Server, z.B. einem der Server 12 oder 12' in Fig. 1, und der Application Client auf einer der Workstations 15 befinden. Wer mit der Technologie vertraut ist, wird auch ohne Schwierigkeit erkennen, dass der Datenverkehr zwischen den Intelligent Agents 17 und dem Manager 18 erheblich kleiner ist als der Datenverkehr auf der Fast Ethernet-Schnittstelle 7 (Fig. 1), da nur noch für die spezielle und gewünschte Anwendung relevante, teilnehmerbezogene Daten übertragen werden müssen. Der Grund ist, dass die in der Datenbank 19 gespeicherten Daten bereits anwendungsspezifisch und teilnehmerbezogen ausgewählt sind und daher von geringerem Umfang als die über die Schnittstelle 7 übertragenen, sozusagen unspezifischen Daten. So wird beispielsweise eine Call Trace Anwendung lediglich die Information über einen Anruf speichern, ohne jedoch die Details der einzelnen Nachrichten zu speichern. Eine Anwendung zur teilnehmerbezogenen Leistungsmessung wird demgegenüber lediglich teilnehmerspezifische Leistungsdaten abspeichern lassen, ohne jedoch Details über ausgeführte Verbindungen aufzuzeichnen.

## Patentansprüche

1. Verfahren zum Überwachen der Teilnehmerverbindungen in einem Telefonienetz, insbesondere einem Mobilkommunikationsnetz, das mit mindestens einem anderen Netz über eine Mehrzahl von Nutz- und Signalisierungskanälen verbunden ist, durch Aufzeichnung des Signalisierungsverkehrs zwischen den Netzen,
dadurch gekennzeichnet, dass
- der Signalisierungsverkehr unmittelbar, d.h. online, auf bestimmte, nach vorgegebenen Kriterien ausgewählte, teilnehmerbezogene Signalelemente reduziert wird und diese ausgewählten Signalelemente in einem Standard-Format übertragen werden,
- danach eine Auswertung der übertragenen Signalelemente, insbesondere quasi-online, derart erfolgt, dass die Signalelemente zu teilnehmerbezogenen Daten korreliert oder zusammengeführt werden und
- eine Speicherung der gewonnenen, teilnehmerbezogenen Daten in einem Standard-Format erfolgt,
- wobei Auswertungsprozesse und/oder Auswertungsergebnisse über Standard-Schnittstellen und/oder mit Standard-Protokollen übertragen werden.

2. Überwachungsverfahren nach Anspruch 1, dadurch gekennzeichnet, dass
- vor der Speicherung die ausgewählten Signalelemente, ggf. nach einer Pufferung, unmittelbar einer weiteren Verarbeitung oder Auswertung nach vorgegebenen teilnehmerbezogenen Kriterien unterworfen werden und
- die Ergebnisse dieser weiteren Verarbeitung teilnehmerbezogen gespeichert werden.

3. Überwachungsverfahren nach einem der Ansprüche 1 oder 2, dadurch gekennzeichnet, dass
- zur Speicherung ausgewählte Signalelemente eine Zeitmarkierung erhalten und diese Zeitmarkierungen zusammen mit den ausgewählten Signalelementen und/oder den daraus ermittelten teilnehmerbezogenen Daten in einem Standard-Format gespeichert werden.

4. Überwachungsverfahren nach zumindest einem der vorhergehenden Ansprüche, dadurch gekennzeichnet, dass
- eine Verarbeitung zumindest eines Teils der ausgewählten und ggf. gepufferten Signalelemente durch dezentral durchgeführte Auswertungsprozesse erfolgt und die ausgewählten und gespeicherten Signalelemente dazu über Standard-Schnittstellen und/oder mit Standard-Protokollen übertragen werden.

5. Überwachungsverfahren nach zumindest einem der vorhergehenden Ansprüche, dadurch gekennzeichnet, dass
- eine Verarbeitung zumindest eines Teils der ausgewählten und ggf. gepufferten Signalelemente zentral erfolgt und die Auswertungsprozesse dazu über Standard-Schnittstellen und/oder mit Standard-Protokollen übertragen werden.

6. System zum Überwachen der Teilnehmerverbindungen in einem Mobilkommunikationsnetz, das mit mindestens einem anderen Netz über eine Mehrzahl von Nutz- und Signalisierungskanälen verbunden ist, durch Aufzeichnung des Signalisierungsverkehrs zwischen den Netzen, gekennzeichnet durch
- eine erste Einrichtung (6) zur unmittelbaren, d.h in Echtzeit durchgeführten Reduzierung des Signalisierungsverkehrs auf nach vorgegebenen Kriterien ausgewählte, ggf. teilnehmerbezogene, Signalelemente,
- eine zweite Einrichtung (8) zur teilnehmerbezogenen Zusammenfassung bzw. Korrelation der ausgewählten Signalelemente, zum Speichern dieser Signalelemente und/oder zur Auswertung dieser Signalelemente,
- wobei die genannten Einrichtungen mit weiteren Einrichtungen (10, 12, 14, 15) des Telefonienetzes im wesentlichen durch Standard-Schnittstellen (7, 9, 11, 13, 16) verbunden sind, über welche Signalelemente und/oder Auswertungsprozesse und/oder Auswertungsergebnisse mittels Standard-Protokollen übertragbar sind.

7. Überwachungssystem nach Anspruch 6, dadurch gekennzeichnet, dass
- die erste (6) und die zweite Einrichtung (8) ebenfalls durch eine Standard-Schnittstelle miteinander verbunden sind, über welche die zur Verarbeitung und/oder Speicherung ausgewählten Signalelemente vorzugsweise in einem Standard-Format und/oder mit einem Standard-Protokoll übertragen werden.

8. Überwachungssystem nach Anspruch 6, dadurch gekennzeichnet, dass
- die erste (6) und die zweite Einrichtung (8) eine Einheit bilden, in der auch die zur zur Verarbeitung und/oder Speicherung ausgewählten Signalelemente vorzugsweise in einem Standard-Format gespeichert werden und/oder mit einem Standard-Protokoll übertragen werden.

9. Überwachungssystem nach zumindest einem der Ansprüche 6 bis 8, dadurch gekennzeichnet, dass
- die zweite Einrichtung (8) einen Speicher (8b) zur Aufnahme der zur Speicherung ausgewählten teilnehmerbezogenen Daten, vorzugsweise in einem Standard-Format, und
- eine Verarbeitungskomponente (8a) zur online oder quasi-online durchgeführten Auswertung der ausgewählten teilnehmerbezogenen Signalelemente enthält.

10. Überwachungssystem nach zumindest einem der Ansprüche 6 bis 9, dadurch gekennzeichnet, dass
- eine Zeitmarkierungs-Einrichtung vorgesehen ist, vorzugsweise als Teil der ersten Einrichtung (6, 6'), die zumindest für einen Teil der ausgewählten, zur Verarbeitung und/oder Speicherung vorgesehenen teilnehmerbezogenen Signalelemente eine Zeitmarkierung erstellt, welche in Zuordnung zu dem ausgewählten Signalelement ebenfalls gespeichert wird.

11. Überwachungssystem nach zumindest einem der Ansprüche 6 bis 10, dadurch gekennzeichnet, dass
- ein zentraler Server (12, 12') für die Auswertung gespeicherter, teilnehmerbezogener Signalelemente vorgesehen ist.

12. Überwachungssystem nach Anspruch 11, dadurch gekennzeichnet, dass
- Auswertungsprozesse in Form von Application Intelligent Agents (17, 17') im Server (12, 12') oder einem Client (15) speicherbar oder von einem oder mehreren Clients (15) in diesen übertragbar sind und
- diese Auswertungsprozesse durch den Server (12, 12'), vorzugsweise unter Steuerung eines Application Managers (18), ausführbar sind.
